# EUROPEAN PATENT APPLICATION

(11) **EP 1 048 208 A1**
(43) Date of publication of application: **02.11.2000**
(21) Application number: 00109037.2
(22) Date of filing: 27.04.2000
(51) Int. Cl.: A01K 13/00, A01K 1/00

(54) **Automatic cooling station for animals**

(30) Priority: 29.04.1999 IT MO990087
(71) Applicant: Fontana, Maurizio, 42013 Casalgrande (Reggio Emilia) (IT); Reggianini, Maria Alba, 42013 Casalgrande (Reggio Emilia) (IT)
(72) Inventor: Barbari Matteo, 41010 Cortile Carpi (Prov. of Modena) (IT)
(74) Representative: Modiano, Guido, Dr.-Ing.

(57) **Abstract**

The automatic cooling station (1) for animals comprises an animal transit cage (2) which is open at the front and rear, a duet (4) for supplying water or the like which is supported by the sides (3) of the cage (2) and is provided with means (5) for dispensing water inside the chamber formed by the sides (3), a tray (6) for collecting the dispensed water which is arranged below the cage (2), an animal presence detector which is fixed to the cage (2) and is operatively connected to an electronic controller (8) which controls a pump (9) that supplies the duct, the detector being adapted to report the presence of the animal to the controller (8) in order to actuate the pump (9) and deliver water according to programmable timings and quantities.

## Description

The present invention relates to an automatic cooling station for animals.

It is known that in animal farms, particularly pig and cattle farms, one of the main problems to be solved regards cooling of said animals.

It is in fact convenient to maintain the body temperature of animals within certain values; if the temperature is too high, it can make them irritable or, for example in the case of sows, it can even lead to their death.

Moreover, in the specific case of sows, during group gestation the required ideal body temperature must be very low, since otherwise it is not possible to impregnate the animal.

In order to obviate this problem, attempts have been made to study and devise systems for cooling animals in the different steps of the production cycle: at present, pits are dug in the ground and filled with water, and the animal wallows in them to cool down.

However, these pits suffer from drawbacks, including the fact that the water contained in them becomes dirty after a small number of passes and that they do not allow to fully meet the thermal comfort requirements of the animals.

The aim of the present invention is to solve the above-mentioned problems by providing an automatic cooling station which allows to maintain the body temperature of the animals within the required values, even in the summer period when particularly high outdoor temperatures occur, and is effective both for outdoor and indoor farms.

Within the scope of this aim, an object of the present invention is to achieve the above-cited aim with a structure which is simple, relatively easy to provide in practice, safe in use, effective in operation and relatively low in cost.

These and other objects are achieved by the present automatic cooling station for animals, characterized in that it comprises an animal transit cage which is open at the front and rear, a duct for supplying water or the like which is supported by the sides of the cage and is provided with means for dispensing water inside the chamber formed by the sides, a tray for collecting the dispensed water which is arranged below the cage, an animal presence detector which is fixed to the cage and is operatively connected to an electronic controller which controls a pump that supplies the duct, the detector being adapted to report the presence of the animal to the controller in order to actuate the pump and deliver water according to programmable timings and quantities.

Further characteristics and advantages of the present invention will become better apparent from the following detailed description of a preferred but not exclusive embodiment of an automatic cooling station for animals, illustrated only by way of non-limitative example in the accompanying drawings, wherein:
Figure 1 is a perspective view of an automatic cooling station for animals according to the invention;

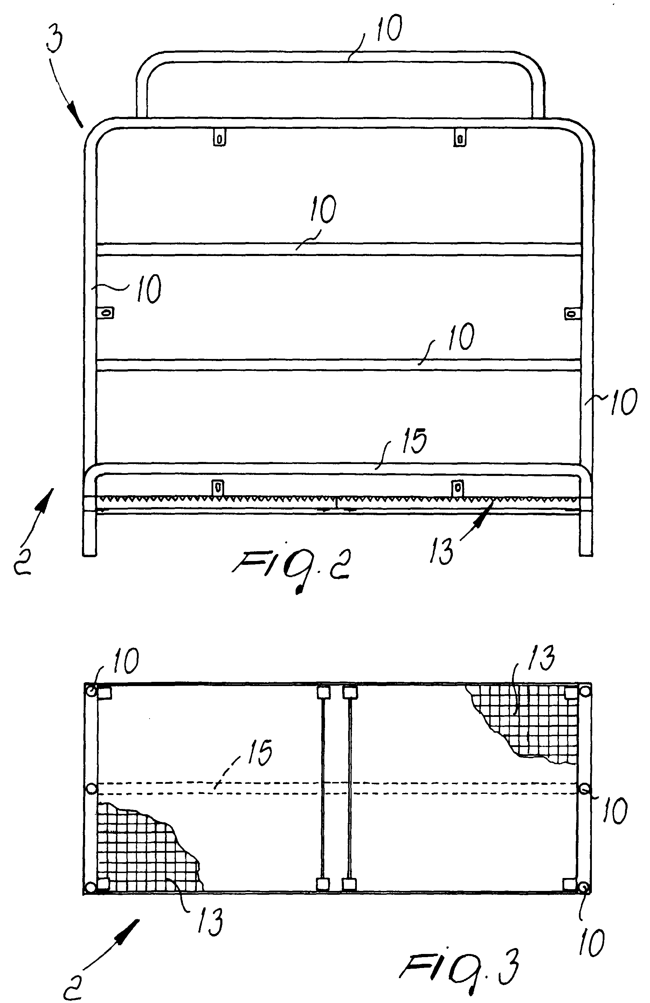

Figure 2 is a schematic side view of the cage of the station according to the invention;
Figure 3 is a plan view of the cage of Figure 2.

With reference to the above figures, 1 generally designates an automatic cooling station for animals.

The station 1 comprises a cage 2 which is open at the front and rear for the transit of the animals and is constituted by two sides 3 which support a duct 4 for supplying water or the like.

The duct 4 is provided with means 5 for dispensing the water inside the chamber formed by the sides 3; the water that is used is conveniently collected in a tray 6 which is arranged below the cage 2.

An animal presence detector 7 is fixed to the cage 2 in a substantially central position and is operatively connected to an electronic controller 8 which controls a pump 9 for supplying the duct 4.

The detector 7 detects the presence of the animal and reports it to the controller 8, which drives the pump 9 so as to dispense, by means of the duct 4 and the means 5, water according to programmable quantities and timings.

The cage 2 is constituted by a plurality of metallic tubular elements 10 which are made of a material such as stainless steel and/or the like.

The dispensing means 5 comprise at least one spray nozzle 11 which is arranged above the sides 3 and allows to wet the animal while it remains inside the station 1.

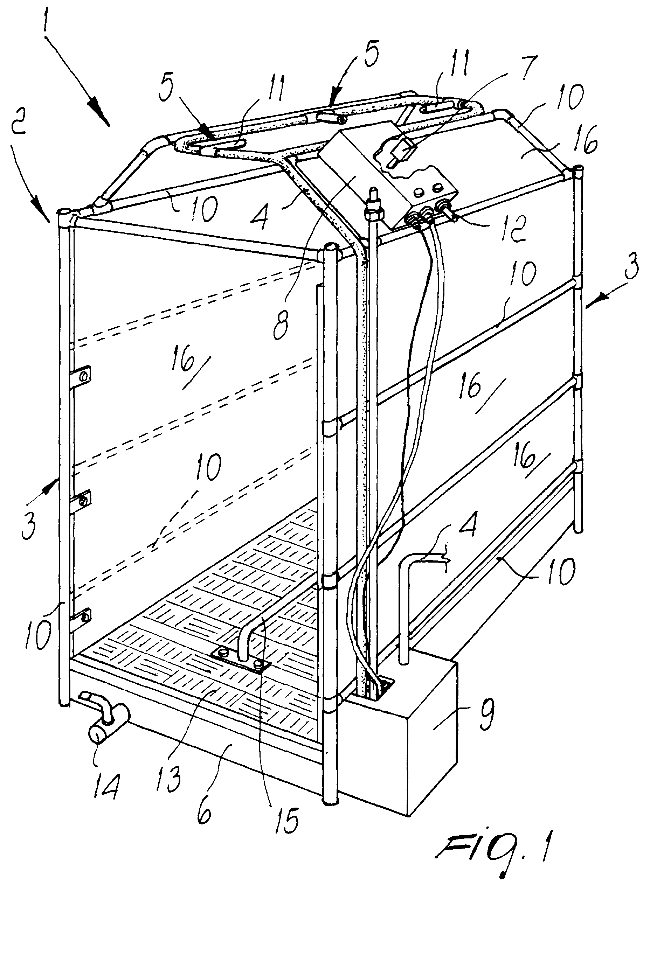

Conveniently, in the embodiment of Figure 1 the spray nozzles 11 are three and are distributed in an upward region along the sides 3, so as to wet the animal in the same manner regardless of whether it enters from the front or rear of the cage 2.

The controller 8 comprises a thermostat 12 which detects the external temperature and allows to activate or shut down said controller for a temperature which is higher, or lower, than a preset value.

The controller 8 is further provided with a microprocessor, not shown, which defines parameters including the water dispensing timings and quantities.

The microprocessor can be programmed so as to provide quantities of water which can vary according to the outside temperature detected by the thermostat 12, according to the type of animal and according to its ideal body temperature.

Advantageously, the cage 2 has, proximate to the top of the tray 6, a walkable grate 13 for partial filtration; the tray, as an alternative to what is shown in Figure 1, may also have a sloping bottom which converges towards the water outlet 14.

A longitudinal element 15 is fitted in a substantially central position on the tray 6, is fixed to the grate 13, and has an appropriate height so as to prevent the animal from lying on the tray and stopping for a prolonged period of time.

Respective protective panels 16 are fixed to the sides 3 and prevent the dispensed water from leaving from the cage 2.

The panels 16 protect the sides 3 and prevent the water from producing mud and dirt, especially in the case of farms in external enclosures with straw and soil; however, embodiments of the station according to the invention without these panels are also possible.

Conveniently, it is possible to also provide means for reading the identification codes with which the animals may be provided, these means being capable of detecting the number of transits of a same animal and of transferring the acquired data to an electronic computer.

With the installed reading means, for example an antenna, it is in fact possible to identify each animal that enters the cooling station and it is possible to acquire very detailed information on the use of said station and to regulate the number of baths required for each animal.

In practice it has been observed that the above-described invention allows to cool animals in general, particularly sows, both in the case of small static groups and in the case of very large and dynamic groups.

The invention thus conceived is susceptible of numerous modifications and variations, all of which are within the scope of the inventive concept.

All the details may further be replaced with other technically equivalent elements.

In practice, the materials employed, as well as the shapes and the dimensions, may be any according to requirements without thereby abandoning the scope of the protection of the appended claims.

The disclosures in Italian Patent Application No. MO99A000087 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic cooling station for animals, characterized in that it comprises an animal transit cage (2) which is open at the front and rear, a duct (4) for supplying water or the like which is supported by the sides (3) of said cage (2) and is provided with means (5) for dispensing water inside the chamber formed by said sides (3), a tray (6) for collecting the dispensed water which is arranged below the cage (2), an animal presence detector (7) which is fixed to the cage (2) and is operatively connected to an electronic controller (8) which controls a pump (9) that supplies said duct (4), said detector (7) being adapted to report the presence of the animal to said controller (8) in order to actuate said pump (9) and deliver water according to programmable timings and quantities.

2. The station according to claim 1, characterized in that said dispensing means (5) are constituted by at least one spray nozzle (11) which is arranged above said sides (3) and is adapted to wet the animal while it remains inside the chamber.

3. The station according to one or more of the preceding claims, characterized in that said spray nozzles (11) are three and are distributed in an upward region along the sides (3) of the cage (2).

4. The station according to one or more of the preceding claims, characterized in that said electronic controller (8) comprises a thermostat (12) which is adapted to detect the outside temperature and to allow the activation or shutdown of the controller (8) for a temperature above, or below, a preset value.

5. The station according to one or more of the preceding claims characterized in that said controller (8) comprises a programmable microprocessor for adjusting the water delivery timing and quantities delivered according to the outside temperature detected by said thermostat and/or according to the type of animal.

6. The station according to one or more of the preceding claims, characterized in that said tray (6) has, at its top, a walkable grate (13) for partial filtration.

7. The station according to one or more of the preceding claims, characterized in that said tray (6) has a sloping bottom which converges towards a water outlet (14).

8. The station according to one or more of the preceding claims, characterized in that a longitudinal element (15) of appropriate height, adapted to prevent the animal from lying on the tray (6), is fitted in a substantially central position on said tray (6).

9. The station according to one or more of the preceding claims, characterized in that respective protective panels (16) can be fixed to said sides (3) and are adapted to prevent the dispensed water from escaping out of the station (1).

10. The station according to one or more of the preceding claims, characterized in that it comprises means for reading the identification codes with which the animals are provided, said means being adapted to detect the number of transits of a same animal and being operatively connectable to a computer.
